# EUROPÄISCHE PATENTSCHRIFT

(11) **EP 3 798 771 B1**
(45) Veröffentlichungstag und Bekanntmachung des Hinweises auf die Patenterteilung: **13.03.2024**
(21) Anmeldenummer: 20186624.1
(22) Anmeldetag: 20.07.2020
(51) Int. Cl.: G05B 19/4065, B02C 18/06, A01D 43/08, A01F 29/22

(54) **VERFAHREN ZUM BETREIBEN EINES ZERKLEINERUNGSAGGREGATS**
METHOD FOR OPERATING A GRINDING UNIT
PROCÉDÉ DE FONCTIONNEMENT D'UN MODULE DE BROYAGE

(30) Priorität: 24.09.2019 DE 102019125624
(43) Veröffentlichungstag der Anmeldung: 31.03.2021
(73) Patentinhaber: CLAAS Selbstfahrende Erntemaschinen GmbH, 33428 Harsewinkel (DE)
(72) Erfinder: Brune, Markus, 33428 Harsewinkel (DE); Heitmann, Christoph, 48231 Warendorf (DE); Huster, Jochen, 33330 Gütersloh (DE); Neitemeier, Dennis, 59510 Lippetal (DE)
(74) Vertreter: CLAAS Gruppe

(56) Entgegenhaltungen:
- EP-A1- 1 027 954
- EP-A1- 2 225 931
- DE-A1-102011 005 317
- DE-B3-102017 127 648

## Beschreibung

Die Erfindung betrifft zunächst ein Verfahren zum Betreiben eines Zerkleinerungsaggregats mit um eine Achse rotierbaren Messern und einer zu der Achse parallel angeordneten, ruhenden Gegenschneide mittels einer Bedieneinrichtung, wobei ein Verschleißzustand und/oder ein Abstand der Messer von der Gegenschneide erfasst und von der Bedieneinrichtung angezeigt wird.

EP 2 008 508 A1 schlägt vor, in einem Zerkleinerungsaggregat und einem Verfahren der vorgenannten Art die Schneidkante eines jeden Messers mittels einer Kamera zu erfassen und in einem Display der Bedieneinrichtung anzuzeigen, wobei Schadstellen automatisch erkannt und optisch hervorgehoben werden. Der Bediener eines Feldhäckslers mit dem Zerkleinerungsaggregat löst anhand der Anzeige ein Schleifen der Messer aus. EP 2 225 931 A1 schlägt vor den Verschleiß der Häckselmesser eines Feldhäckslers mit einer Prognose abzuleiten. Für die Prognose werden Erntegut- und/oder Maschinenparameter berücksichtigt. DE 10 2011 005 317 A1 offenbart ein Verfahren gemäß dem Oberbegriff des Anspruchs 1

Der Erfindung liegt die Aufgabe zugrunde, die Anzeige zu verbessern.

Gemäß dem Anspruch 1 ist vorgesehen dass der Verschleißzustand und/oder der Abstand in einer Online-Anzeige angezeigt wird. Beispielsweise kann für jedes Messer ein mit dem Verschleiß abnehmender Farbbalken angezeigt werden. Der Bediener kann in einem erfindungsgemäßen Verfahren auf einen Blick über die Ausführung eines Schleifvorgangs oder ein Nachstellen der Gegenschneide entscheiden.

In dem erfindungsgemäßen Verfahren löst ein Verschleißzustand und/oder ein Abstand, der einen für alle Messer gemeinsamen Grenzwert überschreitet, auf der Online-Anzeige ein Signal für Wartungsbedarf aus. In einem solchen erfindungsgemäßen Verfahren kann der Bediener eine Wartung - insbesondere einen Schleifvorgang - zu einem im Arbeitsablauf geeigneten Zeitpunkt manuell auslösen. Alternativ kann die Bedieneinrichtung den Wartungsvorgang automatisch auslösen.

Vorzugsweise wird in einem erfindungsgemäßen Verfahren der Verschleißzustand und/oder der Abstand kontinuierlich erfasst und angezeigt. In einem solchen erfindungsgemäßen Verfahren werden kritische Verschleißzustände und/oder Abstände zum frühestmöglichen Zeitpunkt erkannt. Alternativ kann der Verschleißzustand und/oder der Abstand regelmäßig oder nur auf Anforderung des Bedieners erfasst werden.

Vorzugsweise wird in einem erfindungsgemäßen Verfahren ein über alle Messer gemittelter Mittelwert des Verschleißzustands und/oder des Abstands angezeigt. Alternativ oder zusätzlich wird in einem erfindungsgemäßen Verfahren ein über alle Messer ermittelter Maximalwert und/oder Median des Verschleißzustands und/oder des Abstands angezeigt. Weiterhin alternativ oder zusätzlich ermittelt und signalisiert in einem erfindungsgemäßen Verfahren die Bedieneinrichtung aus dem Verschleißzustand und dem Abstand einen Wartungsbedarf. In einem solchen erfindungsgemäßen Verfahren kann der Bediener anhand jeweils eines einzigen Zahlenwerts über die Ausführung eines Schleifvorgangs und/oder ein Nachstellen der Gegenschneide entscheiden. Durch den Median gehen starke Ausreißer in den Messwerten, die durch starke Messerbeschädigung insbesondere bei der Grasernte entstehen können, weniger stark in die Anzeigewerte ein. Je weiter der Verschleiß der Messer fortgeschritten und je größer der Abstand der Messer zu der Gegenschneide ist, desto schlechter wird das Erntegut zerkleinert und desto größer ist der Energiebedarf des Zerkleinerungsaggregats.

Vorzugsweise wird in einem erfindungsgemäßen Verfahren der Verschleißzustand induktiv gemessen. Anhand der Änderung eines Magnetfelds durch ein rotierendes Messer lässt sich besonders gut der Verschleißzustand des Messers automatisch bestimmen. Alternativ oder zusätzlich kann der Verschleißzustand mittels einer Kamera, mittels Laser oder mittels Nahinfrarotsensoren erfasst werden.

Vorzugsweise extrapoliert in einem erfindungsgemäßen Verfahren die Bedieneinrichtung den Verschleißzustand und/oder den Abstand zeitlich in die Zukunft. Eine solche Prognose des Verschleißzustands und/oder des Abstands erlaubt dem Bediener eine vorausschauende Planung der Ausführung eines Schleifvorgangs und/oder des Nachstellens der Gegenschneide in einer geeigneten Prozesspause.

Ein Zerkleinerungsaggregat kann, um die Erfindung auszuführen einen Abstandssensor zum Erfassen eines Abstands der Messer von der Gegenschneide aufweisen und die Bedieneinrichtung kann eingerichtet sein, den Abstand anzuzeigen.

Eine landwirtschaftliche Erntemaschine kann zum Zerkleinern eines von der Erntemaschine geernteten Ernteguts ein solches Zerkleinerungsaggregat aufweisen.

Die Erfindung ist nachstehend anhand eines Ausführungsbeispiels, das in den Figuren dargestellt ist, näher erläutert. Es zeigen:
- Fig. 1:: eine Erntemaschine mit Zerkleinerungsaggregat,
- Fig. 2:: das Zerkleinerungsaggregat im Detail,
- Fig. 3:: einen Hauptbildschirm der Bedieneinrichtung der Erntemaschine und
- Fig. 4:: einen Unterbildschirm der Bedieneinrichtung

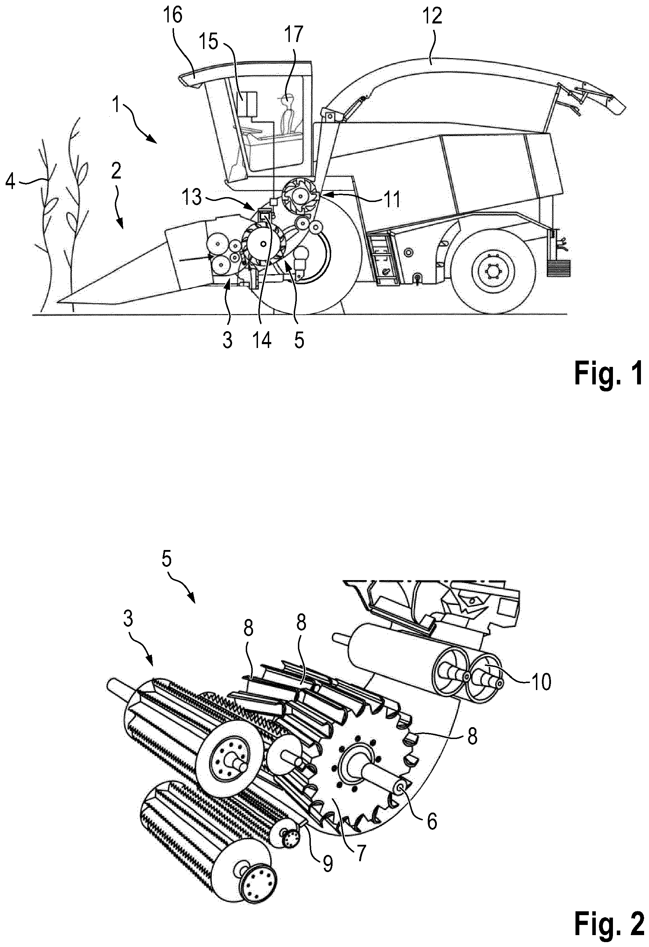

Die in Figur 1 gezeigte landwirtschaftliche Erntemaschine 1 - hier: ein Feldhäcksler - weist frontseitig einen Erntevorsatz 2 auf und an diesen anschließen Einzugs- und Vorpresswalzen 3, die ein aus dem Erntevorsatz 2 kommendes Erntegut 4 - hier: Mais - annehmen, verdichten und an ein in Figur 2 im Detail dargestelltes Zerkleinerungsaggregat 5 übergeben. Das Zerkleinerungsaggregat 5 umfasst eine um eine Achse 6 rotierende Häckseltrommel 7, die mit Messern 8 bestückt ist.

Die Messer 8 laufen an einer Gegenschneide 9 vorbei, über die das Erntegut 4 gefördert wird. Das zerkleinerte Erntegut 4 wird entweder an eine Nachzerkleinerungseinrichtung 10 oder an eine Nachbeschleunigungseinrichtung 11 übergeben. Die Nachzerkleinerungseinrichtung 10 zerkleinert die körnigen Bestandteile des Ernteguts 4 weiter, die Nachbeschleunigungseinrichtung 11 beschleunigt das Erntegut 4 in einen Auswurfkrümmer 12, aus dem es an ein nicht dargestelltes Transportfahrzeug übergeben werden kann.

Das Zerkleinerungsaggregat 5 weist eine Schleifvorrichtung 13 auf. Ein Schleifstein 14 der Schleifvorrichtung 13 ist zum Schleifen der Messer 8 horizontal über die Häckseltrommel 7 bewegbar. Die Schleifvorrichtung 13 ist mittels einer Bedieneinrichtung 15 in einem Führerhaus 16 der Erntemaschine 1 bedienbar.

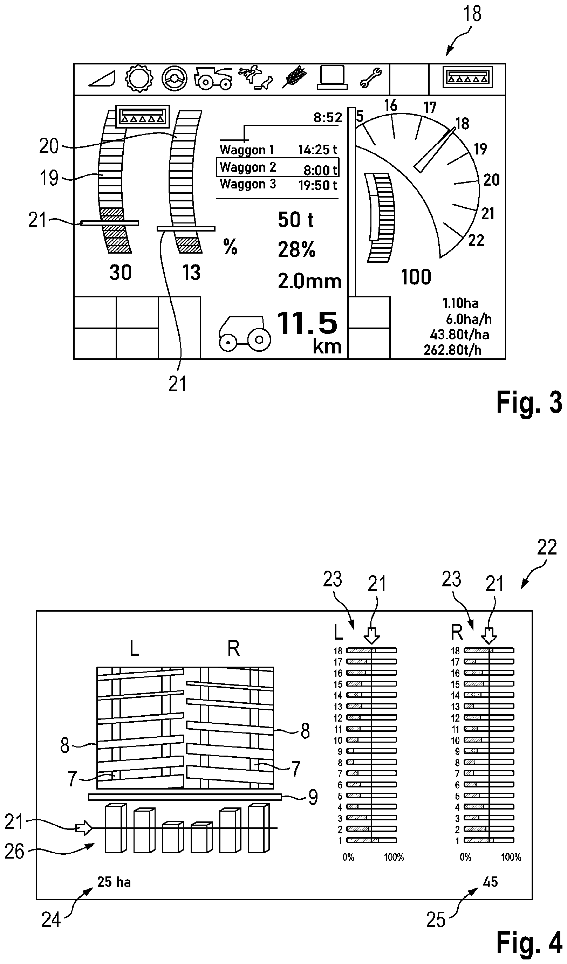

Die Bedieneinrichtung 15 weist auf der einem Bediener 17 zugewandten Seite ein berührempfindliches Display auf, dessen Hauptbildschirm 18 mit den Betriebsparametern der Erntemaschine 1 in Figur 3 dargestellt ist. Der Hauptbildschirm 18 stellt unter anderem den über alle Messer gemittelten Verschleißzustand 19 der Messer 8 in zwei Messerreihen "L" und "R", und den mittleren Abstand 20 der Messer 8 von der Gegenschneide 9 grafisch und in Zahlenwerten sowie Schwellwerte 21 des Verschleißzustands 19 und des Abstands 20 dar. In dem Hauptbildschirm 18 kann wahlweise auch der Median des Verschleißzustands 19 dargestellt werden. Sobald der Verschleißzustand 19 oder der Abstand 20 die Schwellwerte 21 unterschreiten, signalisiert die Bedieneinrichtung 15 in nicht dargestellter Weise einen Wartungsbedarf.

Berührt der Bediener 17 das Display im Bereich der Darstellung des Verschleißzustands 19 und des Abstand 20 der Messer 8 von der Gegenschneide 9, so öffnet die Bedieneinrichtung 15 den in Figur 4 gezeigten Unterbildschirm 22, in dem der Verschleißzustand 23 jedes einzelnen Messers 8 grafisch dargestellt ist. Außerdem zeigt der Unterbildschirm 22 eine durch Extrapolation des Verschleißzustands 19, 23 ermittelte Prognose der bis zum nächsten Schleifvorgang noch zu bearbeitenden Ackerfläche 24 sowie der Anzahl 25 von Schleifvorgängen bis zum Austausch der Messer 8.

Weiterhin zeigt der Unterbildschirm 22 in einem Balkendiagramm 26 den arithmetischen Mittelwert des Abstands 20 der Messer 8 von der Gegenschneide 9 an je drei axial beabstandeten Messstellen der Messerreihen "L" und "R". Alternativ zeigt das Balkendiagramm 26 anstelle des Mittelwerts den Median des Abstands 20 an den Messstellen. Weiterhin kann alternativ der Abstand 20 durch weitere Messstellen feiner aufgelöst dargestellt werden.

In dem Balkendiagramm 26 kann der Bediener 17 die Verteilung des Abstands 20 über der Breite der Häckseltrommel 7 beobachten und Rückschlüsse auf die aktuelle Arbeitsweise des Zerkleinerungsaggregats ziehen. Das in Figur 4 beispielhaft dargestellte Balkendiagramm 26 zeigt, dass die Häckseltrommel 7 "ballig" ist, also an den beiden äußeren Seiten stärker verschleißt als in der Mitte, und der gemittelte Abstand 20 aller Messer 8 von der Gegenschneide 9 dort größer ist.

Die erfindungsgemäße Darstellung des Verschleißzustands 19, 23, des Abstands 20 der Messer 8 von der Gegenschneide 9 und der Prognosen erlaubt dem Bediener 17, die Effizienz der Erntemaschine 1 hoch zu halten, so lange wie möglich zu häckseln und die Durchführung von Schleifvorgängen in geeigneten Prozesspausen zu planen.

Anhand der Anzeige der einzelnen Messer 8 im Unterbildschirm 22 kann der Bediener 17 zudem entscheiden, starke Materialausbrüche und eine daraus resultierende geringere Schärfe bei einzelnen zu tolerieren, wenn das vollständige Wegschleifen der Ausbrüche dazu führen würde, dass die Messer 8 ausgetauscht werden müssten.

### Bezugszeichenliste

- 1: Erntemaschine
- 2: Erntevorsatz
- 3: Einzugs- und Vorpresswalzen
- 4: Erntegut
- 5: Zerkleinerungsaggregat
- 6: Achse
- 7: Häckseltrommel
- 8: Messer
- 9: Gegenschneide
- 10: Nachzerkleinerungseinrichtung
- 11: Nachbeschleunigungseinrichtung
- 12: Auswurfkrümmer
- 13: Schleifvorrichtung
- 14: Schleifstein
- 15: Bedieneinrichtung
- 16: Führerhaus
- 17: Bediener
- 18: Hauptbildschirm
- 19: mittlerer Verschleißzustand
- 20: mittlerer Abstand
- 21: Schwellwert
- 22: Unterbildschirm
- 23: Verschleißzustand
- 24: Ackerfläche
- 25: Anzahl
- 26: Balkendiagramm

## Patentansprüche

1. Verfahren zum Betreiben eines Zerkleinerungsaggregats (5) mit um eine Achse (6) rotierbaren Messern (8) und einer zu der Achse (6) parallel angeordneten, ruhenden Gegenschneide (9) mittels einer Bedieneinrichtung (15), wobei ein Verschleißzustand (19, 23) der Messer (8) und ein Abstand (20) der Messer (8) von der Gegenschneide (9) erfasst und von der Bedieneinrichtung (15) angezeigt wird, *wobei* der Verschleißzustand (19, 23) und der Abstand (20) in einer Online-Anzeige angezeigt wird, **dadurch gekennzeichnet, dass**
ein Verschleißzustand (19, 23) und/oder ein Abstand (20), der einen für alle Messer (8) gemeinsamen Grenzwert überschreitet, auf der Online-Anzeige ein Signal für Wartungsbedarf auslöst und wobei
der Grenzwert mittels eines auf der Online-Anzeige dargestellten virtuellen Stellelements, vorzugsweise eines virtuellen Drehrades einstellbar ist,
wobei bei einer Berührung des Displays der Bedieneinrichtung (15) im Bereich der Darstellung des Verschleißzustands (19, 23) und des Abstands (20) der Messer (8) von der Gegenschneide (9) die Bedieneinrichtung (15) einen Unterbildschirm (22) öffnet, in dem der Verschleißzustand (23) jedes einzelnen Messers (8) grafisch dargestellt ist.

2. Verfahren nach einem der vorgenannten Ansprüche, ***dadurch gekennzeichnet, dass*** der Verschleißzustand (19, 23) und/oder der Abstand (20) kontinuierlich erfasst und angezeigt wird.

3. Verfahren nach dem vorgenannten Anspruch, ***dadurch gekennzeichnet, dass*** ein über alle Messer gemittelter Mittelwert des Verschleißzustands (19) und/oder des Abstands (20) angezeigt wird.

4. Verfahren nach einem der vorgenannten Ansprüche, ***dadurch gekennzeichnet, dass*** ein über alle Messer ermittelter Maximalwert des Verschleißzustands (19) und/oder des Abstands (20) angezeigt wird.

5. Verfahren nach einem der vorgenannten Ansprüche, ***dadurch gekennzeichnet, dass*** die Bedieneinrichtung (15) aus dem Verschleißzustand (19, 23) und dem Abstand (20) einen Wartungsbedarf ermittelt und signalisiert.

6. Verfahren nach einem der vorgenannten Ansprüche, ***dadurch gekennzeichnet, dass*** der Verschleißzustand (19) induktiv gemessen wird.

7. Verfahren nach einem der vorgenannten Ansprüche, ***dadurch gekennzeichnet, dass*** die Bedieneinrichtung (15) den Verschleißzustand (19, 23) und/oder den Abstand (20) zeitlich in die Zukunft extrapoliert und anhand des extrapolierten Verschleißzustands (19, 23) und/oder Abstands (20) eine bis zu einem Wartungsbedarf der Messer (8) verbleibende Arbeitsleistung prognostiziert.

8. Verfahren nach einem der vorgenannten Ansprüche, ***dadurch gekennzeichnet, dass*** der Verschleißzustand (19, 23) und/oder der Abstand (20) nach Betätigung eines auf der Online-Anzeige dargestellten virtuellen Schalters, vorzugsweise eines virtuellen Tasters angezeigt wird.

## Claims

1. A method for operating a crushing assembly (5) with blades (8) which are rotatable about an axle (6) and a stationary counter cutter (9) which is disposed parallel to the axle (6) by means of an operating device (15), wherein a state of wear (19, 23) of the blades (8) and a spacing (20) of the blades (8) from the counter cutter (9) are detected and displayed by the operating device (15), *wherein* the state of wear (19, 23) and the spacing (20) are displayed in an online display, **characterized in that** a state of wear (19, 23) and/or a spacing (20) which exceeds a threshold which is common to all of the blades (8) initiates a maintenance requirement signal on the online display, and wherein
the threshold can be adjusted by means of a virtual adjusting actuator, preferably a virtual thumb wheel, which is depicted on the online display,
wherein, upon touching the display of the operating device (15) in the region where the state of wear (19, 23) and the spacing (20) of the blades (8) from the counter cutter (9) are depicted, the operating device (15) opens a secondary screen (22) in which the state of wear of each individual blade (8) is graphically depicted.

2. The method according to one of the preceding claims, ***characterized in that*** the state of wear (19, 23) and/or the spacing are continuously detected and displayed.

3. The method according to the preceding claim, ***characterized in that*** a mean value for the state of wear (19) and/or the spacing (20) is displayed, determined over all of the blades.

4. The method according to one of the preceding claims, ***characterized in that*** a maximum value for the state of wear (19) and/or the spacing (20) is displayed, determined over all of the blades.

5. The method according to one of the preceding claims, ***characterized in that*** the operating device (15) determines and signals a requirement for maintenance from the state of wear (19, 23) and the spacing (20).

6. The method according to one of the preceding claims, ***characterized in that*** the state of wear (19) is measured inductively.

7. The method according to one of the preceding claims, ***characterized in that*** the operating device (15) forward extrapolates the state of wear (19, 23) and/or the spacing (20) and, with the aid of the extrapolated state of wear (19, 23) and/or spacing (20), predicts a remaining operational capacity until maintenance of the blades (8) is required.

8. The method according to one of the preceding claims, ***characterized in that*** the state of wear (19, 23) and/or the spacing (20) is displayed after actuation of a virtual switch, preferably a virtual button, depicted on the online display.

## Revendications

1. Procédé pour faire fonctionner un module de broyage (5) doté de lames (8), pouvant être mises en rotation autour d'un axe (6), et d'une contre-lame (9) stationnaire disposée parallèlement à l'axe (6), à l'aide d'un dispositif de commande (15), procédé selon lequel un état d'usure (19, 23) des lames (8) et une distance (20) des lames (8) par rapport à la contre-lame (9) sont détectés et affichés par le dispositif de commande (15), l'état d'usure (19, 23) et la distance (20) étant affichés dans un moyen de visualisation en ligne, **caractérisé en ce que**
un état d'usure (19, 23) et/ou une distance (20) qui dépasse(nt) une valeur limite commune à toutes les lames (8) déclenche(nt) sur le moyen de visualisation en ligne un signal de nécessité d'entretien, et où
la valeur limite peut être réglée à l'aide d'un élément de réglage virtuel représenté sur le moyen de visualisation en ligne, de préférence une molette,
sachant que lorsqu'on touche l'écran du dispositif de commande (15) dans la zone de la représentation de l'état d'usure (19, 23) et de la distance (20) des lames (8) par rapport à la contre-lame (9), le dispositif de commande (15) ouvre un écran secondaire (22) dans lequel l'état d'usure (19, 23) de chaque lame (8) individuelle est représenté sous forme de graphique.

2. Procédé selon l'une des revendications précédentes, **caractérisé en ce que** l'état d'usure (19, 23) et/ou la distance (20) sont détectés et affichés en continu.

3. Procédé selon la revendication précédente, **caractérisé en ce qu'**une valeur moyenne de l'état d'usure (19, 23) et/ou de la distance (20), établie avec toutes les lames, est affichée.

4. Procédé selon l'une des revendications précédentes, **caractérisé en ce qu'**une valeur maximale de l'état d'usure (19) et/ou de la distance (20), établie avec toutes les lames, est affichée.

5. Procédé selon l'une des revendications précédentes, **caractérisé en ce que** le dispositif de commande (15) détermine et signale une nécessité d'entretien à partir de l'état d'usure (19, 23) et/ou de la distance (20).

6. Procédé selon l'une des revendications précédentes, **caractérisé en ce que** l'état d'usure (19) est mesuré par induction.

7. Procédé selon l'une des revendications précédentes, **caractérisé en ce que** le dispositif de commande (15) extrapole dans le temps, vers le futur, l'état d'usure (19, 23) et/ou la distance (20), et prédit, sur la base de l'état d'usure (19, 23) et/ou de la distance (20) extrapolés, un rendement restant jusqu'à la nécessité d'entretien des lames (8).

8. Procédé selon l'une des revendications précédentes, **caractérisé en ce que** l'état d'usure (19, 23) et/ou la distance (20) sont affichés après actionnement d'un interrupteur virtuel, de préférence d'un bouton-poussoir virtuel, représenté sur le moyen de visualisation en ligne.
